(19) Europäisches Patentamt

European Patent Office

Office européen des brevets

(11) Veröffentlichungsnummer: **0 637 421 A1**

(12) **EUROPÄISCHE PATENTANMELDUNG**

(21) Anmeldenummer: **94110543.9**

(22) Anmeldetag: **06.07.94**

(51) Int. Cl.⁶: **A23G 3/02**

(30) Priorität: **07.07.93 DE 9310109 U**

(43) Veröffentlichungstag der Anmeldung:
**08.02.95 Patentblatt 95/06**

(84) Benannte Vertragsstaaten:
**AT BE CH DK FR GB IE IT LI LU NL**

(71) Anmelder: **FTD FOAM TECHNOLOGY
DEVELOPMENT GmbH
Seibelstrasse 36
D-40822 Mettmann (DE)**

(72) Erfinder: **Fels, Ulrich
Diplom-Kaufmann
Rue de Sées 42
D-47918 Tönisvorst (DE)**

(74) Vertreter: **Beyer, Rudi
Patentanwalt Dipl.-Ing. Rudi Beyer
Am Dickelsbach 8
D-40883 Ratingen (DE)**

(54) Vorrichtung mit Formen und wenigstens einer Produktaufnahme zur automatischen Befüllung und zur automatischen Entleerung für Produkte der Nahrungsmittelindustrie.

㊼ Die Erfindung betrifft eine Vorrichtung mit Formen und wenigstens einer Produktaufnahme zur automatischen Befüllung und zur automatischen Entleerung für Produkte der Nahrungsmittelindustrie, insbesondere für Speiseeis. Erfindungsgemäß wird aufgezeigt, wie bei hinterschnittenen Formen auch die automatische Entformung komplizierter Formgebungen erfolgen kann. Die erfindungsgemäße Vorrichtung eignet sich insbesondere zum automatischen Befüllen und Entleeren hinterschnittener Formen in der Speiseeisindustrie.

EP 0 637 421 A1

EP 0 637 421 A1

Die Erfindung betrifft eine Vorrichtung mit Formen und wenigstens einer Produktaufnahme zur automatischen Befüllung und zur automatischen Entleerung für Produkte der Nahrungsmittelindustrie, gegebenenfalls mit Zwischenkühlung, sowie insbesondere Reinigung und Sterilisation, mit mindestens einem Träger zur Anordnung mehrerer Produktaufnahmen.

Es ist bekannt, Speiseeis in Portionen in konisch sich nach außen öffnenden, starren, insbesondere aus rostfreiem Stahl bestehenden Formen herzustellen, da sich hinterschnittene Formen ohne Trennung der Form nicht ausformen lassen. Getrennte Formen sind aber konstruktiv aufwendig. Außerdem erfordert das Öffnen und Schließen der Formen zusätzliche Arbeitsvorgänge, worunter die Produktionsgeschwindigkeit leidet.

Der Erfindung liegt die Aufgabe zugrunde, eine Vorrichtung der im Oberbegriff des Schutzanspruches 1 vorausgesetzten Art dahingehend zu verbessern, daß auch Formen mit Hinterschnitt zur Herstellung von zum Beispiel Speiseeisportionen, Sahneportionen, Butterportionen, Schokoladenerzeugnisse und dergleichen sich ohne Öffnen der Form automatisch bei hoher Produktionsgeschwindigkeit entformen lassen.

Die Aufgabe wird durch die in **Patentanspruch 1** wiedergegebenen Merkmale gelöst.

Bei der Erfindung werden die Formen z. B. aus elastisch verformbaren, kautschukartige Eigenschaften aufweisenden Werkstoffen, hergestellt. Der Träger kann in diesem Fall rahmenförmig gestaltet und aus einem härteren Werkstoff hergestellt sein als die an dem Träger angeordneten Produktaufnahmen selbst. Auf diese Weise lassen sich zum Beispiel Formen für Speiseeis in Form von Nüssen, Erdbeeren oder dergleichen verwenden, die ohne Teilung der Form einfach durch Umstülpen und Ausdrücken mittels eines Stempels oder dergleichen ohne Zerstörung der geformten Portionen sich mit hoher Produktionsgeschwindigkeit auch entformen lassen. Zum Beispiel werden die Formen automatisch umgedreht und von unten/hinten durch einen Stempel oder dergleichen ausgestülpt, wodurch die geformte Portion ohne Zerstörung entformt wird. Die Form kehrt dann durch ihre Eigenelastizität wieder in ihre Ausgangslage zurück.

Besonders vorteilhaft ist dabei, daß die Konturen, zum Beispiel Küsse, Rosen, Erdbeeren oder dergleichen mit genauen Reliefs ausgebildet werden können, die an dem fertigen Produkt ohne Zerstörung erhalten bleiben.

In **Patentanspruch 2** ist eine besonders vorteilhafte Lösung beschrieben. Bei dieser werden Formen und die die Formen haltenden Träger aus zwei verschiedenen Silikon-Kunststoffen hergestellt, die unterschiedliche Härten aufweisen.

Hierfür gibt **Patentanspruch 3** eine bevorzugte Lehre zum technischen und planmäßigen Handeln.

Gemäß **Patentanspruch 4** kann der kautschukartige Eigenschaften aufweisende Rahmen durch eine Stahleinlage oder durch eine Einlage aus einem nicht verformbaren Kunststoff oder dergleichen armiert sein.

In **Patentanspruch 5** ist eine Ausführungsform beschrieben, bei welcher die Form jeweils etwa zwei Drittel des Umfanges des zu formenden Erzeugnisses umschließt.

Gemäß **Patentanspruch 6** sind in den Wandungen der Formen Reliefs des zu formenden Erzeugnisses eingearbeitet.

**Patentanspruch 7** beschreibt eine vorteilhafte Ausführungsform für eine Vorrichtung, mittels welcher sich im kontinuierlichen Durchlaufverfahren Formen gemäß der Erfindung befüllen und ebenso im kontinuierlichen Durchlaufverfahren automatisch auch entleeren lassen.

**Patentanspruch 8** beschreibt eine weitere vorteilhafte Alternative für ein kontinuierliches Durchlaufverfahren.

In der Zeichnung ist die Erfindung - teils schematisch - beispielsweise veranschaulicht. Es zeigen:

Fig. 1    eine Form gemäß der Erfindung teils im Längsschnitt, teils abgebrochen dargestellt;

Fig. 2    eine Draufsicht zu Fig. 1, teils abgebrochen dargestellt;

Fig. 3    eine Vorrichtung gemäß der Erfindung mit erfindungsgemäßen Weichformen und

Fig. 4    eine weitere Ausführungsform gemäß der Erfindung.

Mit dem Bezugzeichen 1 ist insgesamt eine Form, die in der Draufsicht eine rechteckige Ausgestaltung aufweist, bezeichnet. Jede der Formen 1 besitzt einen rahmenartigen Träger 2 und mehrere Produktaufnahmen 3, die gleich groß und mit gleichmäßigen Abständen zueinander in dem Träger 2 angeordnet sind.

Der Träger besteht bei den dargestellten Ausführungsformen aus einem relativ harten Silikon-Werkstoff, während die Produktaufnahmen 3 aus einem demgegenüber erheblich weicheren, elastisch verformbaren Silikon-Werkstoff bestehen.

Zum Beispiel kann für den Werkstoff des Trägers 2 folgendes Material zur Anwendung kommen:

2

| Nach 7 Tagen bei 23° C/50 % rel. Luftfeuchte | | | |
|---|---|---|---|
| Dichte bei 23° C, in Wasser | DIN 53 479 A | g/cm$^3$ | 1,02 |
| Härte | DIN 53 505 | Shore A | 75 |
| Reißfestigkeit | DIN 53 504 S3 | N/mm$^2$ | 10,0 |
| Reißdehnung | DIN 53 504 S3 | % | 300 |
| Weiterreißwiderstand | ASTM D 624,B | N/mm | $\geq$ 50 |
| Lineare Schrumpfung | | % | 0,6 |
| Linearer Ausdehnungskoeffizient | 0-120° C | m/mK | 1,6*10$^{-4}$ |

Für die Produktaufnahmen 3 wird dagegen beispielsweise folgender Silikon-Werkstoff verwendet:

| Nach 4 Tagen bei 23° C/50 % rel. Luftfeuchte | | | |
|---|---|---|---|
| Dichte bei 23° C, in Wasser | DIN 53 479 A | g/cm$^3$ | 1,20 |
| Härte | DIN 53 505 | Shore A | 12 |
| Reißfestigkeit | DIN 53 504 S3 | N/mm$^2$ | 3 |
| Reißdehnung | DIN 53 504 S3 | % | 500 |
| Weiterreißwiderstand | ASTM D 624,B | N/mm | 15 |
| Lineare Schrumpfung | | % | 0,6 |

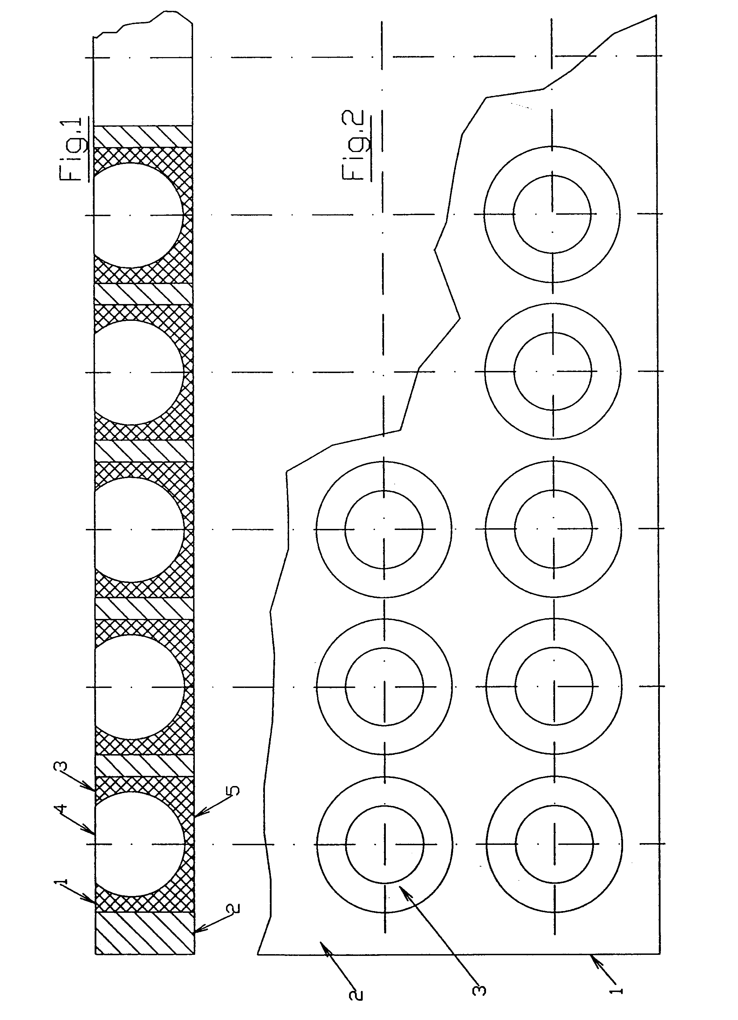

Wie insbesondere die Figur 1 erkennen läßt, sind die Produktaufnahmen 3 mit Hinterschnitt ausgebildet und erstrecken sich etwa über zwei Drittel des Umfanges des zu formenden Produktes, zum Beispiel von Speiseeis, Rosen aus Butter, Erdbeeren, Nüssen aus Speiseeis oder dergleichen.

Das Füllen der Formen 1 geschieht durch die Mündungsöffnungen 4 und das Ausformen durch Druck gegen die Unterseite 5 der betreffenden Produktaufnahme 3 in der noch zu beschreibenden Art und Weise.

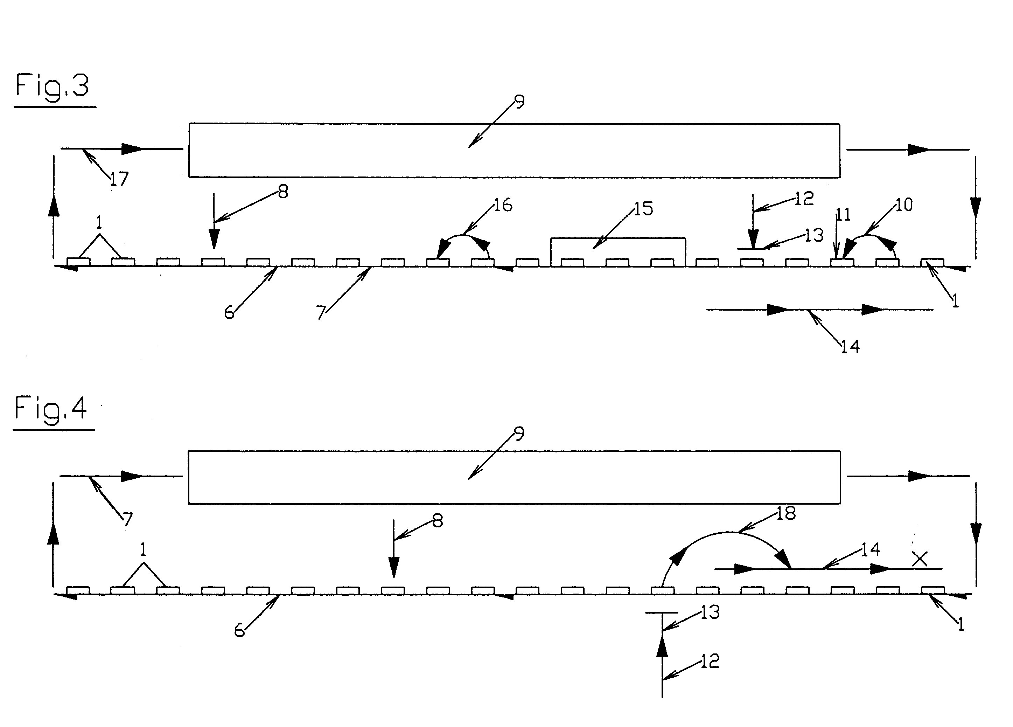

Bei der Ausführungsform gemäß Figur 3 ist mit dem Bezugszeichen 6 ein motorisch angetriebener Förderer bezeichnet. Der Förderer 6 kann zum Beispiel aus zwei oder mehreren mit Abstand sowie parallel zueinander verlaufenden Zugelementen, insbesondere Seilen oder Ketten, bestehen. Es ist jedoch auch möglich, statt dessen andere geeignete Förderer, zum Beispiel aus metallischen Gliedern, zu verwenden.

Auf dem Trum 7 sind mit Abstand sowie parallel zueinander angeordnete Formen 1 vorgesehen, die durch eine Befüllvorrichtung 8 mit dem einzuformenden Produkt, zum Beispiel Speiseeis, befüllt werden. Die Mündungsöffnungen 4 werden dazu taktweise unter die jeweilige Befüllvorrichtung 8 der Produktaufnahmen 3 bewegt. Hierzu können zum Beispiel zahlreiche Befüllvorrichtungen 8 parallel und mit Abstand zueinander angeordnet sein, so daß eine Form 1 mit zahlreichen Produktaufnahmen 3 gleichzeitig oder taktweise mit dem einzuformenden Produkt, zum Beispiel Speiseeis, befüllt werden kann.

Die Formen 1 werden von dem motorisch angetriebenen Förderer 6 an einen motorisch angetriebenen Förderer 17 übergeben und von diesen durch einen Kühltunnel gefördert und dort auf minus 40 Grad Celsius abgekühlt. Nach dem Kühlen werden die Formen 1 wieder dem Förderer 6 zugeführt. Bei 10 ist eine Wendevorrichtung vorgesehen, die die Formen 1 um 180° dreht, was durch den Doppelpfeil angedeutet ist. In der Position 11 ist die Form 1 somit um 180° bereits auf dem Trum 7 gedreht worden.

Mit dem Bezugszeichen 12 ist eine Ausformvorrichtung bezeichnet, die einen Stempel 13 besitzt, der gegen die jeweilige Unterseite 5 der Produktaufnahme 3 drückt und diese nach außen stülpt, so daß das Produkt nach unten ausgeformt und durch ein Förderband 14 abgefördert wird, was ebenfalls durch zwei Doppelpfeile angedeutet ist.

Mit 15 ist eine Reinigungsvorrichtung bezeichnet, in der die Formen 1 zum Beispiel bis auf 100° C erhitzt, gereinigt und sterilisiert werden.

Bei 16 ist eine weitere Wendevorrichtung vorgesehen, durch die die Formen 1 abermals um 180° gedreht werden, so daß die Formen 1 nach ihrem Weitertransport durch den Förderer 6 erneut befüllt werden können.

Bei der Ausführungsform nach Fig. 4 sind für Teile gleicher Funktion die gleichen Bezugszeichen wie in Fig. 3 verwendet worden. Die Ausformvorrichtung drückt orthogonal zum Trum 7 von unten gegen die Unterseite 5 der Produktaufnahmen 3 und formt dadurch das Produkt aus, das durch einen Förderer 18 in Richtung X abgefördert wird.

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

**Bezugszeichenliste**

| 1 | Form |
|---|---|
| 2 | Träger |
| 3 | Produktaufnahmen |
| 4 | Mündungsöffnung |
| 5 | Unterseite |
| 6 | Förderer |
| 7 | Trum |
| 8 | Befüllvorrichtung |
| 9 | Kühltunnel |
| 10 | Wendevorrichtung |
| 11 | Position |
| 12 | Ausformvorrichtung |
| 13 | Stempel |
| 14 | Förderband |
| 15 | Reinigungsvorrichtung |
| 16 | Wendevorrichtung |
| 17 | Förderer |
| 18 | Förderer |

**Patentansprüche**

1. Vorrichtung mit Formen und wenigstens einer Produktaufnahme zur automatischen Befüllung und zur automatischen Entleerung für Produkte der Nahrungsmittelindustrie, gegebenenfalls mit Zwischenkühlung, sowie insbesondere Reinigung und Sterilisation, mit mindestens einem Träger zur Anordnung mehrerer Produktaufnahmen, **dadurch gekennzeichnet,** daß die mit Hinterschnitt ausgebildeten Produktaufnahmen (3) und der Träger (2) aus verschiedenen elastische Eigenschaften aufweisenden kautschukartigen Kunststoffen bestehen, derart, daß der Träger (2) aus einem relativ harten Kunststoff und Produktaufnahmen (3) aus einem relativ weichen, elastisch verformbaren Kunststoff bestehen, oder daß der Träger (2) aus einem metallischen Werkstoff, z. B. rostfreier Stahl und die Produktaufnahmen (3) aus einem relativ weichen, elastisch verformbaren Kunststoff bestehen.

2. Vorrichtung nach Anspruch 1, **dadurch gekennzeichnet,** daß der Träger (2) und die Produktaufnahmen (3) aus unterschiedliche Shore-Härten aufweisenden Silikon-Kautschuken bestehen.

3. Vorrichtung nach Anspruch 1 und/oder 2, **dadurch gekennzeichnet**, daß der Träger aus folgendem Material hergestellt ist:

| Nach 7 Tagen bei 23 ° C/50 % rel. Luftfeuchte | | | |
|---|---|---|---|
| Dichte bei 23 ° C, in Wasser | DIN 53 479 A | g/cm$^3$ | 1,02 |
| Härte | DIN 53 505 | Shore A | 75 |
| Reißfestigkeit | DIN 53 504 S3 | N/mm$^2$ | 10,0 |
| Reißdehnung | DIN 53 504 S3 | % | 300 |
| Weiterreißwiderstand | ASTM D 624,B | N/mm | ≧ 50 |
| Lineare Schrumpfung | | % | 0,6 |
| Linearer Ausdehnungskoeffizient | 0-120 ° C | m/mK | 1,6*10$^{-4}$ |

und daß die Produktaufnahmen (3) aus folgendem Material hergestellt sind:

| Nach 4 Tagen bei 23 ° C/50 % rel. Luftfeuchte | | | |
|---|---|---|---|
| Dichte bei 23 ° C, in Wasser | DIN 53 479 A | g/cm$^3$ | 1,20 |
| Härte | DIN 53 505 | Shore A | 12 |
| Reißfestigkeit | DIN 53 504 S3 | N/mm$^2$ | 3 |
| Reißdehnung | DIN 53 504 S3 | % | 500 |
| Weiterreißwiderstand | ASTM D 624,B | N/mm | 15 |
| Lineare Schrumpfung | | % | 0,6 |

4. Vorrichtung nach Anspruch 1 oder einem der folgenden, **dadurch gekennzeichnet,** daß der Träger (2) mit einer Armierung in Form einer härteren Stahleinlage oder einem hartem Kunststoff ausgerüstet ist, der von dem Werkstoff des Trägers (2) ummantelt ist.

5. Vorrichtung nach Anspruch 1 oder einem der folgenden, **dadurch gekennzeichnet,** daß jede Produktaufnahme (3) die Kontur des zu formenden Gegenstandes zu etwa zwei Dritteln umschließt.

6. Vorrichtung nach Anspruch 1 oder einem der folgenden, **dadurch gekennzeichnet,** daß in der Wandung der Produktaufnahmen (3) das Relief des zu formenden Gegenstandes, zum Beispiel von Nüssen, Rosen, Erdbeeren oder dergleichen, eingeformt ist.

7. Vorrichtung nach Anspruch 1 oder einem der folgenden, **dadurch gekennzeichnet,** daß an einem motorisch angetriebenen Förderer (6) mit Abstand zueinander zahlreiche Formen (1) angeordnet sind, deren Produktaufnahmen (3) von oben durch eine Befüllvorrichtung (8) alle gemeinsam oder taktweise befüllbar sind und daß ein Kühltunnel (9) zum Kühlen der befüllten Formen (1) vorgesehen ist, wobei dem Förderer (6) eine Wendevorrichtung (10) zum Wenden der Formen (1) um 180 ° zugeordnet, der eine Ausformvorrichtung (12) nachgeschaltet ist, die mit mindestens einem, vorzugsweise mit mehreren Stempeln (13) gegen die Unterseite (5) der Produktaufnahmen (3) einwirkt und unter elastischer Verformung der Produktaufnahmen (3) die geformten Gegenstände ausformt, die daraufhin durch einen Förderer (14) abförderbar sind.

8. Vorrichtung nach Anspruch 1 oder einem der Ansprüche 2 bis 6, **dadurch gekennzeichnet,** daß dem Förderer (6) eine Ausformvorrichtung (12, 13) zugeordnet ist, die orthogonal von der Unterseite des Trums gegen die Produktaufnahmen (3) einwirkt und das Produkt ausformt, das durch einen Förderer (18) abtransportierbar ist.

Fig.1

Fig.2

Fig.3

Fig.4

Europäisches
Patentamt

**EUROPÄISCHER TEILRECHERCHENBERICHT**

der nach Regel 45 des Europäischen Patentübereinkommens für das weitere Verfahren als
europäischer Recherchenbericht gilt

Nummer der Anmeldung

EP 94 11 0543

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int.Cl.6) |
|---|---|---|---|
| X | FR-A-1 590 193 (ET. LHOTELLIER) 22. Mai 1970 <br> * Seite 1, Zeile 28 - Seite 2, Zeile 24; Ansprüche 1-5; Abbildungen * <br> --- | 1,2,4 | A23G3/02 |
| X | GB-A-697 071 (R. SOLLICH.) 16. September 1971 <br> * Seite 2, Zeile 75-97; Abbildungen 7,2 * <br> * Seite 3, Zeile 49-52 * <br> ----- | 1,4,6-8 | |

RECHERCHIERTE
SACHGEBIETE (Int.Cl.6)

A23G

## UNVOLLSTÄNDIGE RECHERCHE

Nach Auffassung der Recherchenabteilung entspricht die vorliegende europäische Patentanmeldung den Vorschriften des Europäischen patentübereinkommens so wenig, daß es nicht möglich
ist, auf der Grundlage einiger Patentansprüche sinnvolle Ermittlungen über den Stand der
Technik durchzuführen.
Vollständig recherchierte Patentansprüche:
Unvollständig recherchierte Patentansprüche:
Nicht recherchierte Patentansprüche:
Grund für die Beschränkung der Recherche:

Siehe Ergänzungsblatt C

| Recherchenort | Abschlußdatum der Recherche | Prüfer |
|---|---|---|
| DEN HAAG | 5. Dezember 1994 | GUYON, R |

KATEGORIE DER GENANNTEN DOKUMENTEN

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
Dokument

EPO FORM 1503 03.82 (P04C09)

EP 94 11 0543 -C-

UNVOLLSTÄNDIGE RECHERCHE

Vollständig recherchierte Patentansprüche : 1-4,6-8
Nicht recherchierte Patentansprüche : 5

Grund : Unklarheit für Anspruch 5.